(19) Europäisches Patentamt

European Patent Office

Office européen des brevets

(11) **EP 0 363 746 B2**

(12) **NEW EUROPEAN PATENT SPECIFICATION**

(45) Date of publication and mention
of the opposition decision:
**29.04.1998 Bulletin 1998/18**

(45) Mention of the grant of the patent:
**15.06.1994 Bulletin 1994/24**

(21) Application number: 89117991.3

(22) Date of filing: **28.09.1989**

(51) Int Cl.⁶: **H02H 3/08**, H01C 7/02

(54) **Overcurrent protection device for electrical networks and apparatuses**

Überstromschutzeinrichtung für elektrische Netzwerke und Apparate

Dispositif de protection contre les surintensités pour réseaux électriques et appareils

(84) Designated Contracting States:
**DE ES FR GB IT**

(30) Priority: **13.10.1988 SE 8803644**

(43) Date of publication of application:
**18.04.1990 Bulletin 1990/16**

(73) Proprietor: **ASEA BROWN BOVERI AB**
**721 83 Västeras (SE)**

(72) Inventors:
• **Hansson, Tomas**
**S-199 93 Enköping (SE)**
• **Karlström, Per-Olof**
**S-722 25 Västeras (SE)**

(74) Representative: **Boecker, Joachim, Dr.-Ing.**
**Adelonstrasse 58**
**65929 Frankfurt am Main (DE)**

(56) References cited:
EP-A- 0 087 884          DE-A- 2 434 006
DE-A- 2 935 807          US-A- 3 914 727
US-A- 4 698 614

• "A general approach to circuit design with polyswitch devices" Raychem Corp. 1987
• "PCT resistance devices for circuit protection" Raychem corporation,1987

## Description

The invention relates to an overcurrent and short-circuit protection device for an electrical motor according to the precharacterising part of claim 1. Such a protection device is known from the DE-A-2 935 807.

The device is primarily intended for use in low-voltage networks and for low-voltage apparatuses, which are operating at rated voltages of a maximum of 1000 V.

A device of the above-mentioned kind which is primarily designed for motor protection is previously known from the article "A New PTC Resistor for Power Applications" by R S Perkins et al, published in the journal IEEE Transactions on Components, Hybrids and Manufacturing Technology, Vol. CHMT-5, No. 2. June 1982, pp. 225-230. The device described in this article comprises a thermistor of ceramic type. This thermistor type has, inter alia, the disadvantage that a relatively great quantity of heat must be developed in the thermistor for it to change from its low-resistance to its high-resistance state. This large thermal inertia makes the described device less suitable for short-circuit protection. Another serious disadvantage is. that this thermistor exhibits a negative temperature coefficient when the temperature exceeds a certain value. In addition, a thermistor of ceramic type will easily crack if traversed by a short-circuit current, which is due to the thermal and mechanical stresses to which it is then subjected. In addition, a ceramic thermistor is relatively expensive.

Another type of thermistor intended for overcurrent protection is known from the article "Polyswitch PTC Devices - A New Low-Resistance Conductive Polymer-Based PTC Device for Overcurrent Protection" by F A Doljack, also published in IEEE Transactions on Components, Hybrids and Manufacturing Technology, Vol. CHMT-4, No. 4, Dec. 1981, pp. 372-378. Thermistors of this type are also commercially available. They are built up of a polymeric material, for example high-pressure polyethylene, containing particles of an electrically conducting material, for example carbon black.

Another example of thermistors manufactored of conducting polymer composite with a positive temperature coefficient is known from the EP-A-0 087 884.

An advantage of the polymer-based thermistor compared with the ceramic thermistor resides from its resistance being monotonously with the temperature. In addition, it is considerably cheaper. However, commercially available thermistors of this type are designed for relatively low rated voltages and cannot, therefore, be used directly in distribution networks. In addition. the configuration and electrode connections of these thermistors are normally of such a nature that, upon a short circuit, the thermistors are subjected to great repulsive forces because of antiparallel current paths, whereby the electrodes are torn apart. Furthermore, the transition energy for these thermistors is relatively low, which causes them, in the lower overcurrent range, to give an insufficient delay of the tripping in order to be used directly for motor protection. For the above-mentioned reason, polymer-based thermistors have not, up to now, been employed within the electric power technique to any significant extent, but have mainly been used for protection of electronics equipment (see "A General Approach to Circuit Design With PolySwitch Devices", Raychem Corporation, January 1987 and "PTC Resistance Devices for Circuit Protection", Raychem Corporation, November 1987).

The US-A-4 698 614 discloses a thermistor that consists of a PTC-plate of a polymer composite with an electrode plate on either side thereof. The idea of the document is, to design the thermistor in such a way that the PTC-plate is relieved from shear and tension forces because such forces result in unwanted variations in the characteristic of the thermistor, while compression forces do not mentionably affect said characteristic. For this reason the thermistor is provided with electrodes consisting of mechanically stiff plate-terminal which are clamped against the PTC-plate by direct or indirect connection of the plate-terminals in such a way that only compression forces act on the PTC-plate. The dimensions and thus the mass of said plate-terminals are selected to satisfy the mechanical requirements for providing the necessary strength of said clamping connection. The US-A-4 698 614 claims that a thermistor of the disclosed kind has a 12-15 seconds response time as desired for a motor protector. The current for which this delay time is meant is not disclosed. As a means to vary the response time it is taught to vary the thickness of PTC-plate. The specific problem of using a thermistor for a motor with a starting current of several times the rated current is not mentioned.

In the overload and short-circuit protection device known from the DE-A-2 935 807 the thermistor explicitly mentioned is of the $V_1O_3$-ceramic type. Three thermistors are used in series connection with, for example, the motor of a drilling machine of a hand-held type, to respond at first visually at an overload current of 10%, than at an higher overload current acoustically and at a still higher overload current by interrupting the circuit.

The US-A-3 914 727 describes a device to assist the starting of a single phase motor. The device consists of the series-connection of a thermistor and a special start winding of the motor. The thermistor is provided with a heat-absorbing capacity large enough to prevent the thermistor from reaching its critical temperature prior to the end of the start period of the motor. Thereafter, however, it is intended to relatively rapidly dissipate the heat generated in the thermistor in order to reduce the recovery time of the start assistance device. For this reason the thermistor is in direct contact with relatively thin-walled cup-shaped members the -flanges of which are in heat-conducting contact with the housing, which accommodates the thermistor and which consists of plastic. On the outside of the housing there is provided a body of great heat-absorbing capacity. This body is designed with large thin flanges in order to be able to dissipate the heat to the environment. The idea is that the heat capacity of this heat-absorbing body is so large that its temperature does practically not deviate from the temperature of the environment.

The invention aims at developing an overcurrent and short-circuit protection device for an electrical motor which is relatively simple and inexpensive and which allows that one and the same embodiment of the device can act both as a motor protector for motors with a starting current of 6 to 10 times the rated current and as a short-circuit protector.

To achieve this aim the invention suggests an overcurrent and short-circuit protection device for an electrical motor according to the introductory part of claim 1, which is characterized by the features of the characterizing part of claim 1.

Further developments of the invention are characterized by the features of the additional claims.

By providing the thermistor of the protection device with a thermal delay device, which comprises at least one heat-absorbing body making contact with the thermistor, the advantage is achieved that one and the same component can be used both for motor protection and for short-circuit protection. This entails considerable advantages from the points of view of cost and space. The device can replace conventional fuses as well as so-called automatic fuses (midget circuit-breakers) and it exhibits the advantages of both these types of fuses without suffering from their disadvantages, for example the limited life of the fuse and the limited breaking capacity of the automatic fuse upon a short circuit.

Upon motor starting, the motor protector should not trip, within 5 seconds at a current of six times the rated current, according to present standards. If it is assumed that all heat that is developed in the thermistor during this time is transferred to the electrodes, the following electrode volume is required

$$V_e = \frac{1}{\rho_e} \frac{P_{max} n^2 t_{max}}{c_e(T_t - T_a)}$$

where

$P_{max}$ = the maximum permissible loss power of the protection device

$n$ = 6

$t_{max}$ = 5s

$\rho_e$ = the density of the electrode material

$C_e$ = the specific heat capacity of the electrode material

$T_t$ = the transition temperature of the thermistor

$T_a$ = the ambient temperature.

If the electrode material is copper, and with $P_{max}$ = 2 W, $T_t$ = 120°C and $T_a$ = 20°C, according to the above an electrode volume of about 10 cm$^3$ is required. As can be seen, this volume is independent of the rated current of the protection device if the loss power $P_{max}$ is the same. However, in practice, a certain part of the developed energy is used for heating up the actual thermistor. In addition, in protection devices for low rated current the loss power may be considerably lower than the value stated. In certain cases it is therefore sufficient to provide an electrode volume which is considerably lower than the volume calculated above, for example one-tenth of that value.

As mentioned above, polymer-based thermistors are usually designed for relatively low rated voltages, for example 50-100 V. However, it has been found that these thermistors for brief periods are able to withstand considerably higher voltages, for example 400-500 V. This makes it possible to use this type of thermistors in networks with an operating voltage of, for example, 230 V, where voltage peaks of the above order of magnitude may occur across the thermistor upon breaking of high fault currents, for example in case of a short circuit. One condition for this, however, is that the protection device is provided with means which in such cases provide a rapid voltage relief of the thermistor. This can be achieved, for example, by a varistor connected in parallel with the thermistor, for example a ZnO varistor. Alternatively, according to a further development of the invention, the contact device connected in series with the thermistor may be provided with a high-speed tripping device (a so-called kicker), which is adapted to influence the contact device directly for opening thereof when the thermistor has reached its transition temperature. This tripping device comprises the above-mentioned excitation coil device, which may suitably consist of two co-operating coils, one of which being fixed and the other displaceable. The two coils are connected in series in such a way that the current flows through their windings in opposite directions. In the case of great fault currents, for example upon a short circuit, a strong repulsive force is generated which rapidly displaces the movable coil which, via an actuating member, brings about the opening of the contact device. The principal voltage in the circuit will thus appear only for a brief period across the thermistor and, after the breaking, lies across the contact device, which offers the necessary dielectric strength.

By way of example, the invention will now be described in greater detail with reference to the accompanying drawings showing in

Figure 1      a circuit diagram of a device for overcurrent protection according to the invention,

Figure 2      a curve of resistance versus temperature for a thermistor forming part of the protection device according to Figure 1,

Figure 3      a side view of a thermistor forming part of the protection device according to Figure 1,

Figure 4      a curve of tripping time versus current for a protection device according to Figure 1,

Figure 5    an example of a high-speed tripping device for a contact device forming part of the protection device according to Figure 1,

Figure 6    the variation of the current in case of a short-circuit breaking with a protection device according to Figure 1.

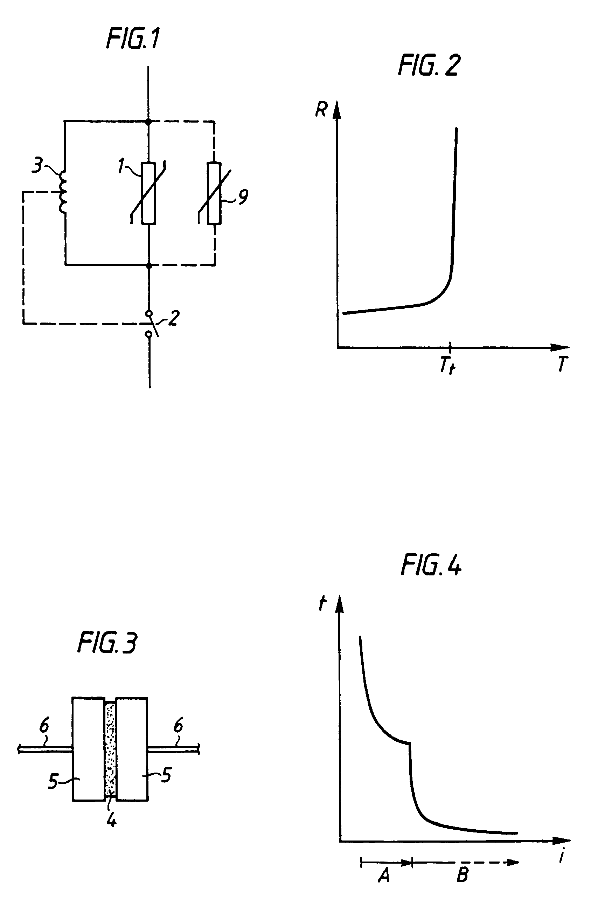

The device for overcurrent protection shown in Figure 1 comprises a thermistor 1 with a positive temperature coefficient (PTC resistor) connected in series with a contact device 2. Connected in parallel with the thermistor 1 is an excitation coil device 3, which forms part of a high-speed tripping device for the contact device 2. The tripping device is adapted to control the contact device 2 in case of an overcurrent. A varistor 9 for overvoltage protection may be arranged in parallel with the thermistor 1.

The thermistor is of the polymer-based type mentioned above. Figure 2 shows the resistance R for such a thermistor 1 as a function of its temperature T. In the normal temperature working range of the thermistor 1, which may extend up to, for example, 80°C, the resistance is low, for example 0.04 $\Omega$, and increases slightly with the temperature. If the temperature of the thermistor 1 increases above said value, for example as a result of an overcurrent, the resistance increases more rapidly, and when a certain temperature T is exceeded, referred to below as the transition temperature, which may, for example, lie at about 120°C, the thermistor 1 abruptly changes from the a low- to a high-resistance state, in which its resistance may amount to 10 k$\Omega$ and more.

The thermistor 1 may, for example, have the shape of a rectangular plate 4 and is provided with electrodes 5 making contact with the flat sides of the plate 4, as will be clear from Figure 3. The electrodes 5 substantially have the same square measure as the thermistor plate 4 but are considerably thicker than the latter. They are made of a material with a good electrical and thermal conductivity, for example of copper. Because they are made of this material, a thermal delay of the protection device according to Figure 1 is achieved when it is subjected to motor starting currents amounting to about 6-10 times the rated current. In this way a protection device can be provided which has a tripping characteristic complying with the requirements for motor protectors according to present national and international standards, for example IEC 159, and which, in addition, provides efficient short-circuit protection.

Figure 4 shows, in principle, a tripping characteristic according to the above. In the region A, which extends to about 10 times the rated current, a thermal delay of the transition of the thermistor from the low- to the high-resistance state is desired, so that the device does not trip upon normal motor starting. This is achieved by the construction shown in Figure 3 in which the thermal capacity of the electrodes 5 is included in the "thermal capacity" of the thermistor.

As a result, a greater quantity of heat and hence a longer time is required to attain the transition temperature of the thermistor material.

Upon a short circuit, on the other hand, a tripping as rapid as possible is desired, which means that the required quantity of heat for the transition of the thermistor 1 shall be as low as possible in this case. Also this is attained by the construction shown in Figure 3, since at the large currents occurring upon a short circuit (region B), the heat developed in the thermistor 1 cannot rapidly enough be transferred to the electrodes 5 to delay the tripping of the thermistor 1. At short-circuit, therefore, the transition of the thermistor occurs at considerably lower heat quantity values than in the starting current region A. In certain cases, the required transition energy upon a short-circuit may amount to only one-tenth of the transition energy upon motor starting.

By providing the thermistor 1 with relatively thick electrodes of a material having good electrical conductivity and connecting the connection leads 6 of the component to the mid-portion of the respective electrode 5, as will be clear from Figure 3, a favourable current distribution is obtained in the component, among other things from a mechanical point of view. With such an embodiment, the risk of the electrodes 5 being torn apart because of electrodynamic repulsive forces, caused by anti-parallel current paths, is minimized.

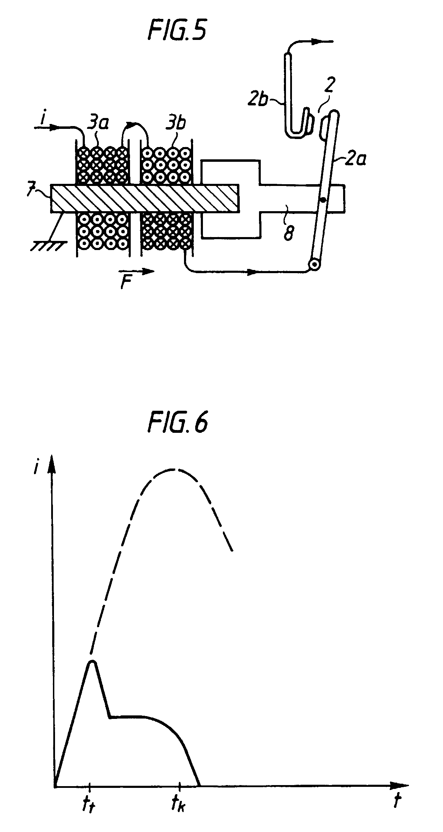

Figure 5 shows an example of how a tripping device for the contact device 2 according to Figure 1 may, in principle, be arranged. The tripping device according to Figure 5 is of a fast electrodynamic type comprising two coils 3a, 3b mounted around a fixed iron core 7, one coil 3a being fixed and the other coil 3b being displaceable along the iron core 7. The coils are series-connected in such a way that the currents in their windings flow in opposite directions around the iron core. Upon a flow of current, the coils are influenced by a repulsive force F which is monotonously growing with the square of the current. The force provides a rapid displacement of the movable coil 3b to the right, and via a carrier 8 of insulating material, the force is transmitted directly to the movable contact of the contact device 2. This contact is rotatably mounted at one end and articulately connected to the carrier 8 at a point between the ends of the contact. This brings about an amplification in the transmission of motion, so that a sufficiently large contact distance can be achieved with a relatively small displacement of the movable coil 3b. This means that the dependence of the electrodynamic forces on the relative position of the coils is minimized.

The task of the iron core 7 is to strengthen the tripping force at the lower overcurrents.

Figure 6 shows the course of the current in the case of breaking a short-circuit with the protection device according to Figure 1. During normal operation the thermistor 1 has a low resistance, for example 0.04 $\Omega$, and

the whole operating current flows through it. If a short circuit occurs, the current increases very rapidly and the thermistor 1 is heated up. At time $t_t$, which is only a few fractions of a millisecond after the occurrence of a short circuit, the thermistor 1 changes from its low- to its high-resistance state (the thermistor trips), the current thus being commutated to the parallel branch where it is limited by the impedance of the coil device 3 which has a relatively high resistance, for example 0.4 Ω. The coil device 3 may suitably be designed as shown in Figure 5. By the action of an electrodynamic force, a fast opening of the contact device is obtained at time $t_k$, whereby the current is broken. Since the current has been limited to a relatively low value because of the impedance of the coil device 3 and, in addition, is mainly resistive, the breaking is relatively simple. The contact device can therefore be very simple and may not have to be provided with arc chutes. In addition, the rapid contact opening provides a rapid voltage relief of the thermistor 1, which therefore need not be designated to continuously withstand the operating voltage.

The invention is not limited to the embodiment shown but several variants are feasible within the scope of the claims. For example, the high-speed tripping device need not consist of two coils, as has been shown, but may instead consist of one coil which acts upon a movable magnet part for opening the contact device. The actuating member of the tripping device need not be mechanically connected to the movable contact but may consist of an insulating plate inserted between the movable and the fixed contact.

## Claims

1. Overcurrent and short-circuit protection device for an electrical motor said device comprising a thermistor (1) connected in series with a contact device (2) and an excitation coil device (3) connected in parallel with the thermistor and being adapted to influence the contact device for opening thereof at an overcurrent, **characterized** in

   that the thermistor (1) is manufactured of a conducting polymer composite with a positive temperature coefficient

   and that the thermistor (1) is arranged in such immediate heat-conducting contact with at least one heat-absorbing body (5)

   that said heat-absorbing body (5) has a volume as to act as a thermal delay device to prevent the thermistor (1) from reaching its critical temperature in case of a starting current of 6 to 10 times the rated current flowing only for a limited time of up to 5 seconds, as, in the case of connecting the motor to a network.

2. Device according to claim 1, **characterized** in that the thermistor (1) is plate-formed and that the thermal delay device consists of two heat-absorbing bodies (5) of a metallic material which make contact with the thermistor (1) on respective sides thereof.

3. Device according to claim 2, **characterized** in that the heat-absorbing bodies (5) are adapted to form connection electrodes for the thermistor (1).

4. Device according to claim 2 or 3, **characterized** in that the volume of the heat-absorbing bodies (5) is larger than 0.9 cm$^3$.

5. Device according to claim 3 or 4, **characterized** in that the thermistor (1) is provided with connection leads (6) connected to the mid-portion of the respective electrode body (5) to minimize the electrodynamic repulsive forces, occurring between the electrode bodies in case of a short circuit.

6. Device according to any of the preceding claims, **characterized** in that said excitation coil device (3) is part of a high-speed tripping device (a so-called kicker) which is adapted to directly influence the contact device (2) for opening the same when the thermistor (1) has reached its transition temperature.

7. Device according to claim 6, **characterized** in that the tripping device comprises two cooperating series-connected coils (3a, 3b) arranged such as to be traversed by the current in opposite directions, one of said coils (3a) being fixed and the other (3b) being displaceable in such a way as to bring about opening of the contact device (2) via an actuating member (8).

8. Device according to any of the preceding claims, **characterized** in that a varistor (9) is connected in parallel with the thermistor (1).

## Patentansprüche

1. Überstrom- und Kurzschlußschutzeinrichtung für einen elektrischen Motor, zu welcher Einrichtung ein mit einer Kontaktvorrichtung (2) in Reihe geschalteter Thermistor (1) gehört, sowie eine Erregerspulenvorrichtung (3), die parallel zum Thermistor geschaltet ist und imstande ist, die Kontaktvorrichtung im Falle eines Überstromes zum Zwecke der Öffnung zu beeinflussen, **dadurch gekennzeichnet,**

   - daß der Thermistor (1) aus einer leitenden Polymerverbindung mit einem positiven Temperatur-Koeffizient hergestellt ist

- und daß der Thermistor (1) in einem solchen unmittelbaren wärmeleitenden Kontakt mit mindestens einem wärmeaufnehmenden Körper (5) steht,

- daß der genannte wärmeaufnehmende Körper (5) ein Volumen hat, um als eine thermische Verzögerungsvorrichtung zu wirken, welche verhindert, daß der Thermistor (1) seine kritische Temperatur im Falle eines Anlaufstromes erreicht, der das sechs- bis zehnfache des Nennstromes beträgt, welcher Anlaufstrom nur für begrenzte Zeit von bis zu fünf Sekunden fließt, wie im Falle des Anschlusses des Motors an ein Netz.

2. Einrichtung nach Anspruch 1, **dadurch gekennzeichnet**, daß der Thermistor (1) plattenförmig ausgebildet ist und daß die thermische Verzögerungsvorrichtung aus zwei wärmeaufnehmenden Körpern (5) aus metallischem Material besteht, von denen jeder mit je einer Seite des Thermistors (1) in Kontakt steht.

3. Einrichtung nach Anspruch 2, **dadurch gekennzeichnet**, daß die wärmeaufnehmenden Körper (5) so beschaffen sind, daß sie Anschlußelektroden für den Thermistor (1) bilden.

4. Einrichtung nach einem der Ansprüche 2 oder 3, **dadurch gekennzeichnet**, daß das Volumen der wärmeaufnehmenden Körper (5) größer als $0,9\,cm^3$ ist.

5. Einrichtung nach einem der Ansprüche 3 oder 4, **dadurch gekennzeichnet**, daß der Thermistor (1) mit Anschlußleitern (6) versehen ist, die an die Mittelabschnitte des zugehörigen Elektrodenkörpers (5) angeschlossen sind, zur Minimierung der abstoßenden elektrodynamischen Kräfte, die im Falle eines Kurzschlusses zwischen den Elektrodenkörpern auftreten.

6. Einrichtung nach einem der vorhergehenden Ansprüche, **dadurch gekennzeichnet**, daß die genannte Erregerspulenvorrichtung (3) Teil einer Hochgeschwindigkeits-Auslösevorrichtung (ein sogenannter Kicker) ist, welche so beschaffen ist, daß sie direkt auf die Kontaktvorrichtung (2) wirkt, um diese zu öffnen, wenn der Thermistor (1) seine Übergangstemperatur erreicht hat.

7. Einrichtung nach Anspruch 6, **dadurch gekennzeichnet**, daß die Auslösevorrichtung zwei zusammenarbeitende in Reihe geschalteter Spulen (3a, 3b) enthält, die so angeordnet sind, daß sie in entgegengesetzter Richtung vom Strom durchflossen werden, wobei eine der Spulen (3a) fixiert ist und die andere derart verschiebbar angeordnet ist, daß sie eine Öffnung der Kontaktvorrichtung (2) über ein Betätigungsglied (8) bewirkt.

8. Einrichtung nach einem der vorhergehenden Ansprüche, **dadurch gekennzeichnet**, daß ein Varistor (9) parallel zum Thermistor (1) geschaltet ist.

## Revendications

1. Dispositif de protection contre les surintensités et les courts-circuits pour un moteur électrique, ce dispositif comprenant une thermistance (1) connectée en série avec un dispositif de contact (2), et un dispositif d'excitation à bobine (3) connecté en parallèle avec la thermistance et conçu de façon à influencer le dispositif de contact pour provoquer son ouverture en présence d'une surintensité; **caractérisé** en ce que la thermistance (1) est fabriquée en un matériau composite consistant en un polymère conducteur ayant un coefficient de température positif, et en ce que la thermistance (1) est disposée dans une relation de contact thermique immédiat avec au moins un corps absorbant la chaleur (5), que ce corps absorbant la chaleur (5) a un volume le faisant agir comme un dispositif de retard thermique pour empêcher que la thermistance (1) n'atteigne sa température critique dans le cas où une surintensité de démarrage, atteignant de 6 à 10 fois le courant nominal, passe seulement pendant une durée limitée allant jusqu'à 5 secondes, comme dans le cas de la connexion du moteur électrique à un réseau.

2. Dispositif selon la revendication 1, **caractérisé** en ce que la thermistance (1) a la forme d'une plaquette et en ce que le dispositif de retard thermique consiste en deux corps absorbant la chaleur (5) en un matériau métallique, qui sont en contact avec des faces respectives de la thermistance (1).

3. Dispositif selon la revendication 2, **caractérisé** en ce que les corps absorbant la chaleur (5) sont conçus de façon à former des électrodes de connexion pour la thermistance (1).

4. Dispositif selon la revendication 2 ou 3, carac**térisé** en ce que le volume des corps absorbant la chaleur (5) est supérieur à $0,9\,cm^3$.

5. Dispositif selon la revendication 3 ou 4, **caractérisé** en ce que la thermistance (1) comporte des conducteurs de connexion (6) qui sont connectés à la partie centrale du corps d'électrode (5) respectif, pour minimiser les forces répulsives électrodynamiques qui apparaissent entre les corps d'électrodes en cas de court-circuit.

6.  Dispositif selon l'une quelconque des revendications précédentes, **caractérisé** en ce que le dispositif d'excitation à bobines (3) fait partie d'un dispositif de déclenchement rapide (encore appelé "kicker") qui est conçu pour influencer directement le dispositif de contact (2) pour ouvrir ce dernier lorsque la thermistance (1) a atteint sa température de transition.

7.  Dispositif selon la revendication 6, **caractérisé** en ce que le dispositif de déclenchement comprend deux bobines connectées en série (3a, 3b) qui coopèrent et qui sont disposées de façon à être traversées par le courant dans des directions opposées, l'une de ces bobines (3a) étant fixe et l'autre (3b) pouvant être déplacée de manière à provoquer l'ouverture du dispositif de contact (2) par l'intermédiaire d'un organe d'actionnement (8).

8.  Dispositif selon l'une quelconque des revendications précédentes, **caractérisé** en ce qu'une varistance (9) est connectée en parallèle avec la thermistance (1).

FIG.1

FIG. 2

FIG.3

FIG.4

8

EP 0 363 746 B2

*FIG.5*

*FIG.6*